# EUROPEAN PATENT SPECIFICATION

(11) **EP 0 793 781 B1**
(45) Date of publication and mention of the grant of the patent: **08.03.2000**
(21) Application number: 95942500.0
(22) Date of filing: 15.11.1995
(51) Int. Cl.: F16B 13/00, F16B 25/10

(54) **ANCHOR INSERT IMPROVEMENT**
VERBESSERUNG AN EINER MAUERANKERVORRICHTUNG
AMELIORATION CONCERNANT UN DISPOSITIF D'ANCRAGE AU MUR

(30) Priority: 23.11.1994 US 344823
(43) Date of publication of application: 10.09.1997
(73) Proprietor: Cobra Anchors Co. Ltd., East Montreal P.Q. (CA)
(72) Inventor: MCSHERRY, Thomas, W., Temple, PA 19506 (US)
(74) Representative: Godwin, Edgar James
(86) International application number: US9515465
(87) International publication number: WO9616273

(56) References cited:
- US-A- 126 366
- US-A- 5 098 435
- US-A- 5 160 225
- US-A- 5 403 137

## Description

This invention relates to improvements in a wall anchor, for securing a support fastener and, particularly, to a cylindrical wall anchor with an outer thread for threading into wall material such as dry wall, sheet rock and wood comprising the surface material of a hollow wall or similar structure.

In U.S. Patent 5,308,203 the distal or cutting end of the anchor is constructed to provide a circular cut in the wall in advance of the outer threads as the distal end of the anchor is press-turned into the wall. The anchors disclosed in U.S. Patent 5,308,203 have through bores extending from the flanged end of the anchor to the open cutting end where opposed saw teeth extend from the periphery. The open end provides access to the bore for wall material that is displaced by the sawing action of the teeth as the anchor is rotated and pressed into the wall. The threads which preferably extend and diminish in size from the flanged end to closely adjacent the teeth act to assist in drawing the anchor through the wall as do the threads of a screw when rotated into material.

We have experimented with prototype hollow cylindrical anchors which provide centering points at their distal ends. In one instance, a flat arrow-shaped drill bit straddles the open distal end of the anchor. In another instance, a centering finger extends from the inner surface of the bore adjacent a single cutter which extends from the periphery of the open end. In yet another instance, the single cutter extending from the periphery of the anchor is formed as a cowl with the tip brought to the anchor's axis.

While we have found these anchors with centering points work well to center the cutting end of the anchor and to leave an open area to receive the material dislodged from the wall by the cutter into the bore, it has been determined that a cutter fashioned after a drill bit of a fluted construction is a preferable centering device. The problem, however, which presents itself is, if such a drill bit is incorporated in an anchor of this type, access to the bore for the dislodged material is lost, and a purely drilling operation would then push the drilled material axially to explode from the inner surface of the hollow wall or jamb the anchor in a solid wall.

The prototype anchor has a hollow cylindrical body which diminishes in diameter toward the distal cutting end in the form of a pointed dome with a centering tip disposed at the center axis of the anchor. A single cutter with a centering tip, fluted along the side, much like a drill flute is formed at the dome-shaped distal end of the anchor. The cutter extends integrally from the outwardly threaded, hollow, cylindrical proximal end of the anchor with its tip at the axis of the anchor and its flute extending inwardly and proximally from the tip to communicate with, as an extension of, the bore of the proximal end. The flute, which now provides access to the bore of the anchor for the material being dislodged from the wall, is defined at its outer lateral edges by the leading and trailing edges of the cutter. Because of the direction of the edges of the flute, the leading edge is a sawing and cutting edge rather than a drilling edge. To this end, the leading edge extends radially and proximally from the tip in a plane in common with the axis of the anchor and at its forward or distal end is distended along a part of its length extending from the centering point in a curved path first outwardly then inwardly where it meets and forms part of the distal end of the bore at the entering end of the thread of the proximal end of the anchor. This inward curvature provides rearward axial cutting of wall material which has not been cut by the forward distal end of the leading edge because of the lesser diameter of the cutter forward of the distention. This configuration of the leading edge also tends to keep the anchor centered as it enters the wall.

In this construction, the axial length of the cutting end portion of the anchor need not be coextensive with the width of the wall in which it is inserted, because the outer thread of the anchor is designed to thread into the wall material as soon as the distal cutter has been inserted in the wall, so as to avoid drilling. The lead or axial thrust and rotation speed of the cutting end portion does not affect the lead of the outer threads of the anchor because the height of crest of the entering end of the thread is sufficiently low to enter the wall material without mutilating it. Preferably, the crest of the thread increases in height from the entry end to the flange of the anchor to provide a wedging action between the wall material and the root of the anchor threads.

Furthermore, it is recommended to use screws that are coextensive with the threaded proximal end. Longer screws after threading through the splines on the inner surface of the bore of the anchor will dislocate or bend the cutting end portion as the tip of the screw hits the converging surface of the flute, particularly if the anchor is made of nylon or polypropylene or of other plastics or mixtures thereof. Consequently, the anchor could not be used in another installation, if desired.

It was found, however, that the distal end cutting portion, though operable, is weak to the extent that sometimes when cutting through wall material which was or had become more dense than usually encountered in most wall boards, the cutting end portion would twist and bend and some of the cut wall material would lodge between the outer surface of the cutting end and the wall material.

US-A-5 308 203 discloses a wall anchor for insertion in a wall board, having a cylindrical body with an outer thread along almost the whole of its length and with an axial through-passage extending from a flanged proximal end to a sew-tipped distal end. The thread does not extend to the saw teeth.

US-A-126 366 corresponds to the pre-characterising part of claim 1 and discloses an anchoring the form of a wood screw having a cylindrical body with an outer thread and with an axial through-passage extending from a flanged proximal end to a tapering distal end portion constituting a cutter having a lateral opening. The thread ends short of the flanged end and does not extend into the cutter portion. Furthermore, the anchor is not intended to receive a screw fastener.

It is an object of the present invention to strengthen the cutting end of an anchor which has a flute extending from the center tip of the anchor proximally to form a part of and to communicate with the bore of the anchor.

The present invention provides an anchor as set forth in claim 1.

The invention conceived the idea of extending the threading on the outer surface of the proximal end uninterruptedly to immediately adjacent the center tip so that the thread would completely surround the cutting end, thereby strengthening it. Molding problems making doing so difficult (though not impossible) as the thread path extends over the empty space formed by the flute. A more pressing problem is that the thread partially closes the access opening, already partially closed because of the disposition of the centering tip at the anchor axis, thereby positioning the access opening along the side of the anchor. These problems may be overcome by interrupting the threading in the area of the flute passage. As it turned out, the edges of the interrupted thread at the leading cutting edge of the single cutter at the cutting end assist nicely in the simultaneous cutting and thread/tapping of the wall material while strengthening the cutting end against bending under the torque forces engendered by turning the anchor in the wall material.

### DESCRIPTION OF THE DRAWINGS

Fig. 1 is a side plan view of a prototype anchor, not in accordance with the invention, having a center point on the cutting end portion and outer threads extending from the proximal end to adjacent the cutting end portion;
Fig. 2 is a front plan view of the anchor of Fig. 1 taken along the line 2-2 in Fig. 1;
Fig. 3 is a top plan view of the anchor of Figs. 1-2 taken along the line 3-3 of Fig. 2;
Fig. 4 is a bottom plan view of the anchor of Figs. 1-3 taken along the line 4-4 in Fig. 2;
Fig. 5 is a broken away sectional view of the anchor of Figs. 1-4 taken along the line 5-5 in Fig. 1;
Fig. 6 is a side plan view of an improved anchor in accordance with the invention;
Fig. 7 is a front plan view of the anchor of Fig. 6 taken along the line 7-7 in Fig. 6;
Fig. 8 is a top plan view of the anchor of Figs. 6-7 taken along the line 8-8 of Fig. 7;
Fig. 9 is a side plan view of, broken away, an anchor similar to the anchor of Figs. 6-8, but showing the threading extending across the access area; and
Fig. 10 is a is a perspective view of the anchor of Figs. 6-8.

### DETAILED DESCRIPTION OF THE ANCHORS OF THE DRAWINGS

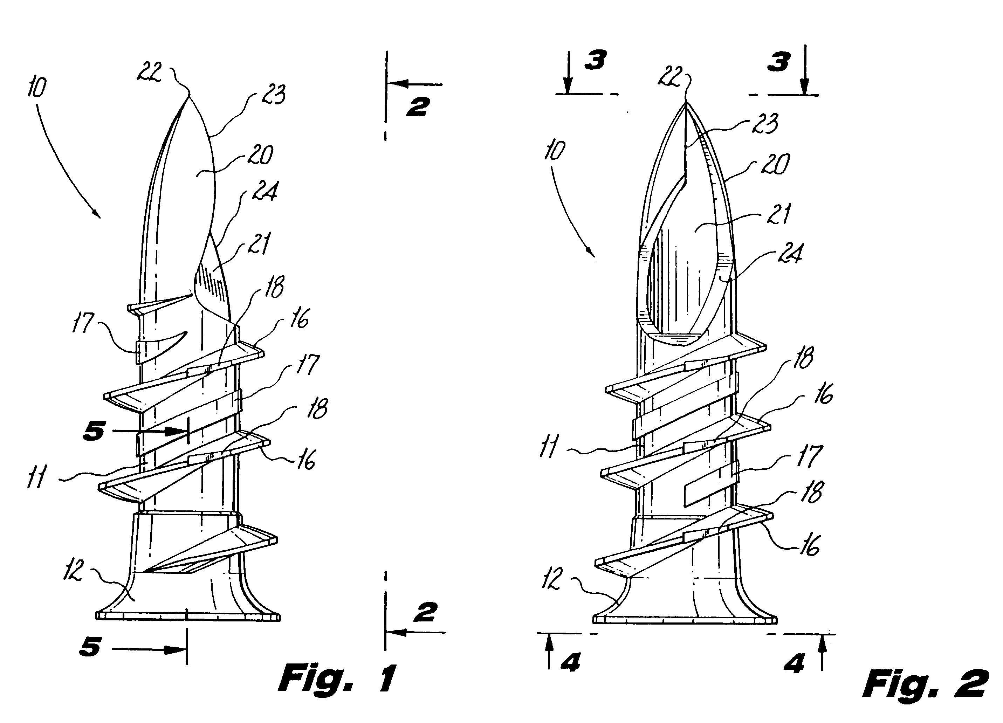

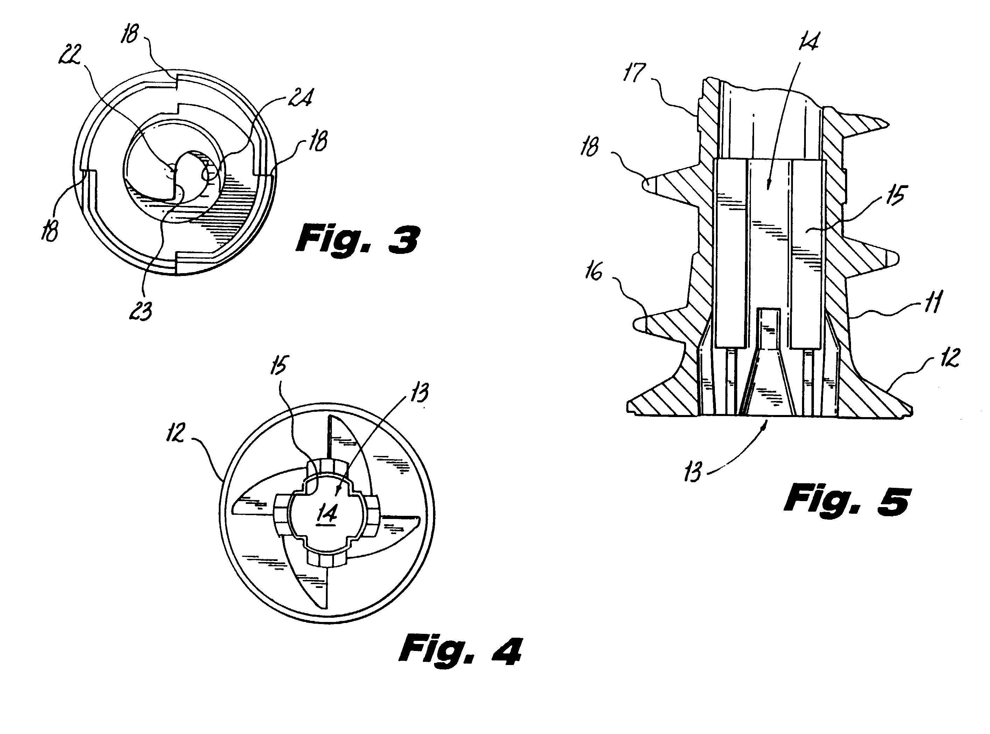

The anchor 10 of Figs. 1-5 is a prototype not in accordance with the invention and comprises a generally cylindrical proximal end portion 11 with an enlarged flanged end 12 providing a torque producing tool receptor opening 13 which communicates, along the axis of the anchor, with through bore 14. Bore 14 extends uninterruptedly along the axis of the anchor from the receptor opening 13 to the flute 21 of a cutting end portion or cutter 20, with which the bore communicates.

Splines 15 extend axially along the inner surface of the bore 14 for receiving the threading of a support screw (not shown). Threading 16 spirals around the outer surface of the anchor all along the proximal end portion 11 of the anchor, diminishing in crest height from the flange 12 to the plane of joinder between the proximal end portion 11 and the cutter 20. Flat band 17 spirals between the crests of the threading 16 and acts to compact the wall material against itself when the anchor is threaded into the wall. The crests of the threading 16 are formed with cutting indentations 18 to assist in the threading of the anchor into the wall. As the anchor is rotated, these indentations actually cut the path of the threading in the wall material.

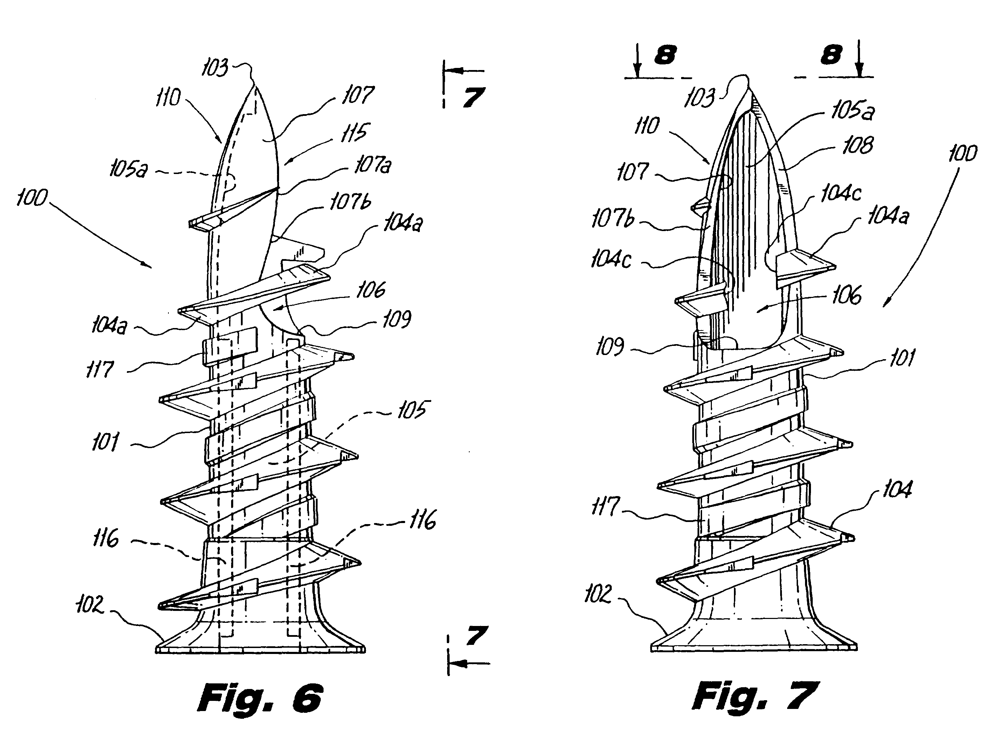

Referring to Figs. 6-10, an anchor 100 in accordance with the invention comprises a hollow cylindrical body 101 with a proximal end having a flange 102. The cylindrical body 101 diminishes in diameter from about the longitudinal center of the anchor (about 54% of the length of the anchor from the flanged end) to a distal cutting end portion in the form of a pointed dome with a centering tip 103 disposed on the center axis of the anchor.

High threading 104 extends along the outer surface of the cylindrical body 101 from the flange 102 to closely adjacent the centering tip 103. The threading 104 in this instance decreases in height from about the longitudinal center of the body 101 to the distal end of the threading 104 near the centering tip 103.

Flat band 117 spirals between the crest turns of the threading 104 and acts to compact the wall material against itself when the anchor 100 is threaded into the wall.

An inner bore 105 extends continuously from its opening at the proximal end of the anchor 100 along the center axis of the cylindrical body 101 to the centering tip 103 at the distal end where it is partially closed because of the diminishing diameter of the cylindrical body 101 and the disposition of the centering tip 103 on the center axis of the anchor. The distal end 105a of the bore 105 is open along the side of the single cutter 110 to provide access to wall material cut from the wall as the anchor is rotated.

Fastener receiving splines 116 extend axially along the inner surface of the bore 105 from the opening 113 at the proximal end to the single cutter 110 at the distal end.

As in the anchor 10 of Figs. 1-5, the distal end 105a of the bore 105, because of the diminishing diameter of the distal end of the cylindrical body 101, is in the form of a deep flute. The opening 106 of the distal end 105a of the bore 105 along the side of the single cutter 110, which provides access for material cut from the wall to the bore 105, is generally triangular in shape (best seen in Fig. 7), the sides of which are formed by the leading and trailing edges 107, 108 of the single cutter 110, which extend from the apex at the centering tip 103 in diverging spiral paths to a base at about the longitudinal center of the anchor 100 (about 46% of the length of the anchor from the distal cutting end) formed by a circumferential segment 109 of the distal end of the cylindrical body 101.

The leading edge 107 extends along its spiral path, but is distended as at 107a along a part of its length extending from the centering point in a curved path while the trailing edge 108 extends along its spiral path without distention. The curvature of the distention returns as at 107b before edge 107 meets base segment 109 providing first, circular axial cutting of the material forward of the distention 107a and then circular axial cutting of the material rearward of the return 107b of the distention. The diameter of the anchor increases as the leading edge 107 cuts in this manner while the opening 106 of the distal end 105a of the bore 105 widens providing maximum access to the distal end of the bore for material cut from the wall.

As the anchor 100 is rotated in the wall material, the distended edge 107a acts to both cut the material and gather the cut material through the opening 106 into the distal end 105a of the bore 105 rather than push the material circumferentially. The forward and rearward cutting action also tends to keep the anchor centered.

The opening 113 of the bore 105 at the proximal end of the anchor 100 is formed to receive a tool, such as a screw driver, to rotate the anchor after the centering tip 103 and edges 107, 108 of the flute enter the wall material to approximately the distal end 115 of the threading 104.

It is important to note here that the thread turn 104a which extends along the outer surface of the single cutter 110 adds body and strength to the anchor at the distal cutting end to substantially avoid twisting of the anchor distal end as it is turned in the wall material.

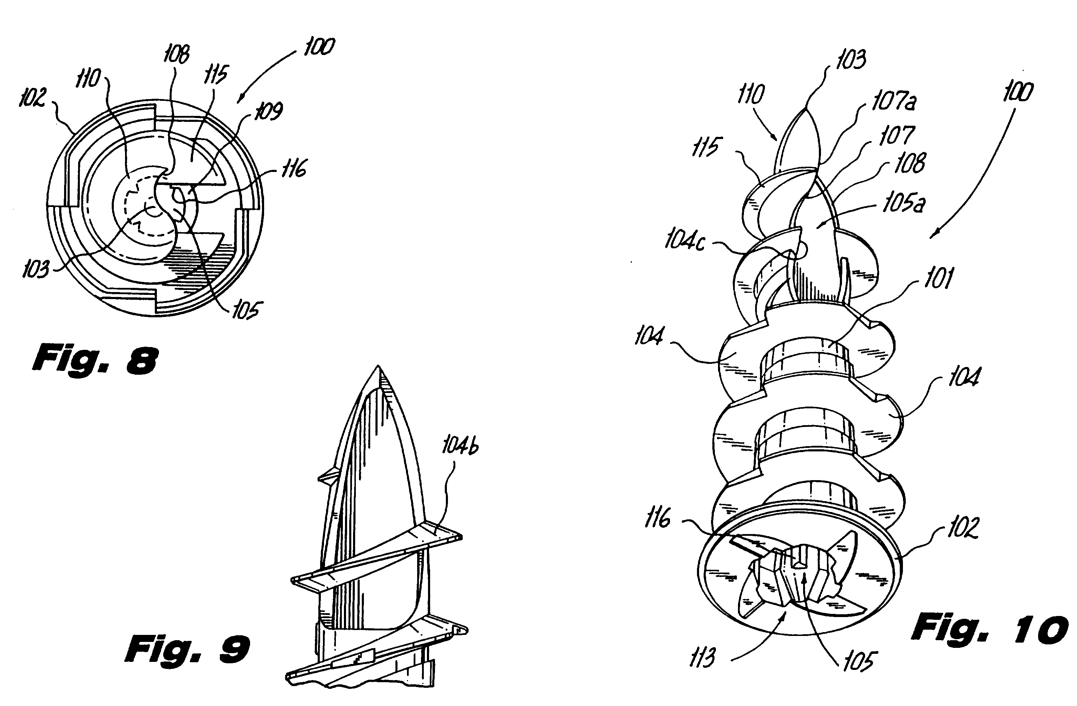

While turn 104a might be extended in a complete spiral path, as indicate at 104b in Fig. 9, because of operational effectiveness, it is preferable to interrupt turn 104 in the area of the distal end of the bore, as at 104c, to provide better access for the cut wall material to the bore 105.

It was also found that the edge 104c of the interrupted thread at the leading or cutting edge 107 of the flute assisted in the cutting function of the cutter 110.

In operation, the centering tip 103 which enters the wall material and is followed almost immediately by the distal end of the thread 104 which, as the anchor 100 is rotated, commences to cut into the wall to tap the wall material in the manner of a screw, without drilling a hole in advance of the tapping, and assists in pulling the anchor through the wall material until the anchor is embedded in the wall material with the flange 102 and high threading 104, particularly of the proximal turn of the threading adjacent the flange, compacting the wall material around the cylindrical body 101 and between the proximal turn of the threading and the flange to resist further turning of the anchor as the threads of a fastener cut into the fastener receiving elements 116 in the bore 105.

## Claims

1. A wall anchor (100) for insertion in wall board material, comprising a cylindrical body (101) extending along a center axis and having a radially extending flange (102) at a proximal end, the cylindrical body (101) diminishing in diameter along a distal cutting end portion (110) and forming a pointed dome with a centering tip (103) disposed on the center axis, outer threading (104) extending substantially along the length of the cylindrical body (101) and an axial passage (105) extending from an opening at the proximal end of the body (101) to an opening (106) in the distal cutting end portion (110) where the axial passage (105) is partially closed because of the diminishing diameter of the cylindrical body (101) and the disposition of the centering tip (103), recess means (113) at the proximal end for receiving a drive tool for rotating the anchor for cutting through the wall board with the distal cutting end portion (110), the said opening (106) extending along only one side of the distal cutting end portion (110) and constituting access means along the said only one side communicating with the axial passage (105) for passing material cut from the wall board into the axial passage, the said opening (106) being defined by a leading edge (107) and a trailing edge (108) of a single cutter (110) characterised in that the said edges (107,108) extend from the centering tip (103) in diverging spiral paths, the outer threading (104) extends from adjacent the flange (102) to adjacent the centering tip (103) and constitutes means for tapping the wall board material as well as pulling the anchor (100) through the wall board material as the single cutter (110) rotates without drilling a hole through the wall board in advance of the threading (104), which threading (104) is high at least adjacent the flange (102) so that, when the anchor (100) is embedded in the wall material, rotation of the anchor (100) causes compression of the wall material for resisting further distal movement of the anchor when a screw fastener is tapping means (116) for receiving and being tapped by the threads of a screw fastener, the said means (116) extending axially along the axial passage (105) from the proximal end.

2. An anchor according to claim 1, wherein the outer threading (104) is interrupted at the said opening (106) in the distal cutting end portion (110), to provide uninterrupted access for wall material at the said opening (106).

3. An anchor according to claim 1 or 2, wherein the said leading edge (107) is distended along a curved edge extending from the centering tip (103).

4. An anchor according to claim 3, wherein the distended leading edge (107) returns at its end remote from the centering tip (103).

## Patentansprüche

1. Wandanker (100) zum Einsetzen in Leichtbauwandplattenmaterial, der folgendes aufweist: einen zylindrischen Körper (101), der längs einer Mittelachse verläuft und am proximalen Ende einen in Radialrichtung verlaufenden Flansch (102) hat, wobei der Durchmesser des zylindrischen Körpers (101) längs eines distalen Schneidendabschnitts (110) abnimmt und einen spitzen Kopf mit einer Zentrierspitze (103) bildet, die auf der Mittelachse angeordnet ist, ein Außengewinde (104), das im wesentlichen über die Länge des zylindrischen Körpers (101) verläuft, und einen Axialdurchgang (105), der sich von einer Öffnung am proximalen Ende des Körpers (101) bis zu einer Öffnung (106) im distalen Schneidendabschnitt (110) erstreckt, wo der Axialdurchgang (105) auf Grund des abnehmenden Durchmessers des zylindrischen Körpers (101) und der Anordnung der Zentrierspitze (103) teilweise geschlossen ist, Aussparungsmittel (113) am proximalen Ende zur Aufnahme eines Antriebswerkzeugs zum Drehen des Ankers, um mit dem distalen Schneidendabschnitt (110) die Leichtbauwandplatte zu durchschneiden, wobei die Öffnung (106) längs nur einer Seite des distalen Schneidendabschnitts (110) verläuft und längs der nur einen Seite Zugangsmittel darstellt, die mit dem Axialdurchgang (105) in Verbindung stehen, um Material, das aus der Leichtbauwandplatte herausgeschnitten worden ist, in den Axialdurchgang zu führen, wobei die Öffnung (106) durch eine Vorderkante (107) und eine Hinterkante (108) eines einschneidigen Schneidwerkzeugs (110) definiert ist, dadurch gekennzeichnet, daß die Kanten (107, 108) von der Zentrierspitze (103) in divergierenden spiralförmigen Bahnen verlaufen, das Außengewinde (104) von angrenzend an den Flansch (102) bis angrenzend an die Zentrierspitze (103) verläuft und Mittel darstellt, um ein Innengewinde in das Leichtbauwandplattenmaterial zu schneiden und den Anker (100) in das Leichtbauwandplattenmaterial hineinzuziehen, wenn das einschneidige Schneidwerkzeug (110) rotiert, ohne vor dem Gewinde (104) ein Loch durch die Leichtbauwandplatte zu bohren, wobei das Gewinde (104) wenigstens angrenzend an den Flansch (102) hoch ist, so daß die Drehung des Ankers (100), wenn der Anker (100) in das Wandmaterial eingebettet ist, das Zusammendrücken des Wandmaterials bewirkt, um einer weiteren distalen Bewegung des Ankers entgegenzuwirken, wenn ein Schraubenbefestigungselement ein Innengewinde in Mittel (116) zur Aufnahme schneidet und durch die Gewindegänge eines Schraubenbefestigungselementes mit einem Innengewinde versehen wird, wobei die Mittel (116) vom proximalen Ende in Axialrichtung längs des Axialdurchgangs (105) verlaufen.

2. Anker nach Anspruch 1, bei dem das Außengewinde (104) an der Öffnung (106) im distalen Schneidendabschnitt (110) unterbrochen ist, um den ununterbrochenen Zugang für Wandmaterial an der Öffnung (106) zu ermöglichen.

3. Anker nach Anspruch 1 oder 2, bei dem die Vorderkante (107) längs einer gekrümmten Kante, die von der Zentrierspitze (103) ausgeht, aufgeweitet ist.

4. Anker nach Anspruch 3, bei dem die aufgeweitete Vorderkante (107) an dem von der Zentrierspitze (103) entfernten Ende wieder zurückgeführt wird.

## Revendications

1. Ancrage mural (100) destiné à être inséré dans un matériau de panneau mural, comprenant un corps cylindrique (101) s'étendant le long d'un axe central et comportant une bride à extension radiale (102) au niveau d'une extrémité proximale, le corps cylindrique (101) ayant un diamètre réduit le long d'une partie d'extrémité de coupe distale (110) et formant un dôme pointu avec un embout de centrage (105) agencé sur l'axe central, un filetage extérieur (104) s'étendant pratiquement le long de la longueur du corps cylindrique (101) et un passage axial (105) s'étendant à partir d'une ouverture au niveau de l'extrémité proximale du corps (101) vers une ouverture (106) dans la partie d'extrémité de coupe distale (110), où le passage axial (105) est partiellement fermé par suite du diamètre réduit du corps cylindrique (101) et de l'agencement de l'embout de centrage (103), un moyen d'évidement (113) au niveau de l'extrémité proximale pour recevoir un outil d'entraînement pour faire tourner l'ancrage en vue de la découpe à travers un panneau mural par l'intermédiaire de la partie d'extrémité de coupe distale (110), ladite ouverture (106) s'étendant le long d'un seul coté de la partie d'extrémité de coupe distale (110) et constituant un moyen d'accès le long dudit seul côté communiquant avec le passage axial (105) pour faire passer le matériau découpé du panneau mural dans le passage axial, ladite ouverture (106) étant définie par une arête avant (107) et une arête arrière (108) d'un seul dispositif de coupe (110), caractérisé en ce que lesdites arêtes (107, 108) s'étendent de l'embout de centrage (103) dans des trajectoires en spirale divergentes, le filetage extérieur (104) s'étendant d'un point adjacent à la bride (102) vers un point adjacent à l'embout de centrage (103) et constituant un moyen pour tarauder le matériau du panneau mural et pour tirer l'ancrage (100) à travers le matériau du panneau mural lors de la rotation du seul dispositif de coupe (110), sans forer un trou à travers le panneau mural avant le filetage (104), ce filetage (104) étant élevé, du moins près de la bride (102), de sorte que lorsque l'ancrage est noyé dans le matériau du mur, la rotation de l'ancrage (100) entraîne la compression du matériau du mur pour assurer la résistance à un déplacement distal ultérieur de l'ancrage lorsqu'un moyen (116) est taraudé par une vis, en vue de la réception des filets d'une vis et d'un taraudage correspondant, ledit moyen (116) s'étendant axialement le long du passage axial (105) à partir de l'extrémité proximale.

2. Ancrage selon la revendication 1, dans lequel le filetage extérieur (104) est interrompu au niveau de ladite ouverture (106) dans la partie d'extrémité de coupe distale (110) pour établir un accès ininterrompu pour le matériau du mur au niveau de ladite ouverture (106).

3. Ancrage selon les revendications 1 ou 2, dans lequel ladite arête avant (107) est étirée le long d'un bord courbé s'étendant à partir de l'embout de centrage (103).

4. Ancrage selon la revendication 3, dans lequel l'arête avant étirée (107) retourne au niveau de son extrémité éloignée de l'embout de centrage (103).
